# EUROPEAN PATENT APPLICATION

(11) **EP 3 584 456 A1**
(43) Date of publication of application: **25.12.2019**
(21) Application number: 18178419.0
(22) Date of filing: 19.06.2018
(51) Int. Cl.: F16B 41/00

(54) **A SAFETY CLIP**

(71) Applicant: ABB Schweiz AG, 5400 Baden (CH)
(72) Inventor: Weidinger, Libor, 664 67 Syrovice (CZ); Bihary, Jozef, 915 01 Nové Mesto nad Váhom (SK)
(74) Representative: Schmidt, Karl Michael

(57) **Abstract**

The present invention relates to Safety Clip (10) for securing a bolt in a mounting rail. It is described to insert (110) a body of a bolt through a first slot of a mounting rail from a set side of the mounting rail. An anchor section situated at or towards a first end of an elongated body of a clip is inserted (120) through a second slot of the mounting rail from the set side of the mounting rail. the second slot is located adjacent to the first slot. A fixing section situated at or towards a second end of the elongated body of the clip is inserted (130) through a third slot of the mounting rail from the set side of the mounting rail. A head of the bolt is contacted (140) with the elongated body of the clip.

## Description

### FIELD OF THE INVENTION

The present invention relates to a Safety Clip for securing a bolt in a mounting rail and to a method of securing a bolt in a mounting rail with a Safety Clip.

### BACKGROUND OF THE INVENTION

A Smart Low Voltage Compartment production line requires that already assembled mounting rails, such as DIN Rails, are inserted and fixed in the Smart LVC frame. Holding the coach bolts in their correct positions in mounting rail slots, before the devices are assembled, is problematic. In other situations, assembly of equipped mounting rails into the LVC frame is equally difficult because it is difficult to hold the bolts in correct positions.

### SUMMARY OF THE INVENTION

Therefore, it would be advantageous to have a technology for holding bolts in mounting rails.

The object of the present invention is solved with the subject matter of the independent claims, wherein further embodiments are incorporated in the dependent claims. It should be noted that the following described aspects of the invention apply also for the Safety Clip for securing a bolt in a mounting rail and to a method of securing a bolt in a mounting rail with a Safety Clip.

In a first aspect, there is provided a Safety Clip for securing a bolt in a mounting rail, the clip comprising:
- an elongated body;
- an anchor section; and
- a fixing section;

The anchor section is situated at or towards a first end of the elongated body. The fixing section is situated at or towards a second end of the elongated body distal to the first end. The anchor section is configured to be inserted into a first slot of a mounting rail. When the anchor section has been inserted into a first slot of the mounting rail the elongated body and fixing section are configured to enable the fixing section to be inserted into a second slot of the mounting rail. When the anchor section has been inserted into the first slot and the fixing section has been inserted into the second slot the elongated body is configured to contact a bolt head of a bolt inserted into a third slot of the mounting rail, wherein the third slot is situated between the first slot and the second slot.

Thus, in other words a clip, made for example from a spring steel stripe, leads over the head of a bolt such as a coach bolt and is caged on both ends in slots of the mounting rail. The bolt is then pressed into its slot, and does not fall out and is generally in the correct orientation for fixing of a nut to the other end of the bolt, but allows a user to manipulate the orientation when necessary.

In this manner, bolts such as coach bolts can be held in position in mounting rail slots of for example a DIN rail, for assembly of for example low voltage compartments.

In this way, bolts such as coach bolts are held in position and are ready for assembly of devices onto the mounting rail.

Safety is provided for the operator/worker, because the bolts and Safety Clip itself cannot jump out from the mounting rail as the clip securely pushes the bolt head against its slot. Also, a mounting rail assembly with devices/terminals is easy to mount on a low voltage compartment metal sheet frame.

The clip is easy to insert, provides a perfect fit and securely holds bolts in their respective slots of a mounting rail.

In an example, the elongated body is configured to bend.
In this manner, a flat sheet of material can be cut into the clip shape, and then bent over a bolt head during insertion of its two ends into slots of a mounting rail, thereby providing a simple and cost effective way of manufacturing the clips and whole LVC mounting system.

In an example, the elongated body is configured to bend elastically from a first geometry to a second geometry and upon release return back to the first geometry.

In this manner, the clip can be reusable, and as the clip wants to return to its original shape it pushes down on the bolt head to keep it secure it its slot, and the two ends of the clip are securely pulled up against the underside of the rail at the slot positions.

In an example, before insertion of the anchor section into the first slot the elongated body is substantially straight.

In an example, when the anchor section has been inserted into the first slot and the fixing section has been inserted into the second slot the elongated body is configured to push against the bolt head of the bolt inserted into the third slot of the mounting rail.

In an example, a width of the anchor section perpendicular to a long axis of the elongated body in an axis extending from a first point on a first side of the anchor section to a second point on a second side of the anchor section is greater than a width of the first slot. The width of the first slot is perpendicular to an axis of the mounting rail that extends from the first slot to the second slot.

In an example, an anchor neck section of the elongated body adjacent to the anchor section has a width perpendicular to the long axis of the elongated body in an axis extending from a first point on a first side of the anchor neck section to a second point on a second side of the anchor neck section that is less than the width of the first slot. The axis extending from the first point on the first side of the anchor section to the second point on the second side of the anchor section is in a direction substantially parallel to a direction of the axis extending from the first point on the first side of the anchor neck section to the second point on the second side of the anchor neck section. In an example, a width of the fixing section perpendicular to a long axis of the elongated body in an axis extending from a first point on a first side of the fixing section to a second point on a second side of the fixing section is greater than a width of the second slot. The width of the second slot is perpendicular to an axis of the mounting rail that extends from the first slot to the second slot.

In an example, a fixing neck section of the elongated body adjacent to the fixing section has a width perpendicular to the long axis of the elongated body in an axis extending from a first point on a first side of the fixing neck section to a second point on a second side of the fixing neck section that is less than the width of the second slot. The axis extending from the first point on the first side of the fixing section to the second point on the second side of the fixing section is in a direction substantially parallel to a direction of the axis extending from the first point on the first side of the fixing neck section to the second point on the second side of the fixing neck section.

In an example, the first side of the fixing section is on an opposite side of the clip to the second side of the fixing neck section. A first axis parallel to the long axis of the elongated body goes through the first point on the first side of the fixing section and a second axis parallel to the long axis of the elongated body goes through a point on a first section of the second side of the fixing neck section. A distance perpendicular to the long axis extending from the first axis to the second axis is less than the width of the second slot.

In an example, a second section of the second side of the fixing neck section is situated between the first section of the second side of the fixing neck section and the second side of the fixing section. A third axis parallel to the long axis of the elongated body goes through a point on the second section of the second side of the fixing neck section. A distance perpendicular to the long axis extending from the first axis to the third axis is greater than the width of the second slot.

In a second aspect, there is provided a method of securing a bolt in a mounting rail with a Safety Clip, comprising:
a) inserting a body of a bolt through a first slot of a mounting rail from a set side of the mounting rail;
b) inserting an anchor section situated at or towards a first end of an elongated body of a clip through a second slot of the mounting rail from the set side of the mounting rail, wherein the second slot is located adjacent to the first slot;
c) inserting a fixing section situated at or towards a second end of the elongated body of the clip through a third slot of the mounting rail from the set side of the mounting rail; and
e) contacting a head of the bolt with the elongated body of the clip.

In an example, step c) comprises bending the elongated body of the clip.

In an example, a width of the anchor section perpendicular to a long axis of the elongated body in an axis extending from a first point on a first side of the anchor section to a second point on a second side of the anchor section is greater than a width of the second slot. The width of the second slot is perpendicular to an axis of the mounting rail that extends from the second slot to the third slot. An anchor neck section of the elongated body adjacent to the anchor section has a width perpendicular to the long axis of the elongated body in an axis extending from a first point on a first side of the anchor neck section to a second point on a second side of the anchor neck section that is less than the width of the second slot. The axis extending from the first point on the first side of the anchor section to the second point on the second side of the anchor section is in a direction substantially parallel to a direction of the axis extending from the first point on the first side of the anchor neck section to the second point on the second side of the anchor neck section. Step b) comprises inserting the anchor section through the second slot with the axis extending from the first point on the first side of the anchor section to the second point on the second side of the anchor section being in a direction other than perpendicular to the axis of the mounting rail and then rotating the clip such that the axis extending from the first point on the first side of the anchor section to the second point on the second side of the anchor section is perpendicular to the axis of the mounting rail.

In an example, a width of the fixing section perpendicular to a long axis of the elongated body in an axis extending from a first point on a first side of the fixing section to a second point on a second side of the fixing section is greater than a width of the third slot. The width of the third slot is perpendicular to an axis of the mounting rail that extends from the first slot to the second slot. A fixing neck section of the elongated body adjacent to the fixing section has a width perpendicular to the long axis of the elongated body in an axis extending from a first point on a first side of the fixing neck section to a second point on a second side of the fixing neck section that is less than the width of the third slot. The axis extending from the first point on the first side of the fixing section to the second point on the second side of the fixing section is in a direction substantially parallel to a direction of the axis extending from the first point on the first side of the fixing neck section to the second point on the second side of the fixing neck section. The first side of the fixing section is on an opposite side of the clip to the second side of the fixing neck section. a first axis parallel to the long axis of the elongated body goes through the first point on the first side of the fixing section and a second axis parallel to the long axis of the elongated body goes through a point on a first section of the second side of the fixing neck section. A distance perpendicular to the long axis extending from the first axis to the second axis is less than the width of the second slot. Step c) comprises inserting the second side of the fixing section into the third slot followed by moving the clip sideways such that the first section of the second side of the fixing neck section is moved towards a facing side of the third slot followed by inserting the first side of the fixing section into the third slot.

In an example, a second section of the second side of the fixing neck section is situated between the first section of the second side of the fixing neck section and the second side of the fixing section. A third axis parallel to the long axis of the elongated body goes through a point on the second section of the second side of the fixing neck section. A distance perpendicular to the long axis extending from the first axis to the third axis is greater than the width of the second slot. The method comprises step d), positioning the clip such that the second side of the fixing neck section is adjacent a facing side of the third slot.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a representation of an example of a Safety Clip before application;
Fig. 2 shows a representation of the Safety Clip of Fig. 1 when applied with the mounting rail and bolt not shown;
Fig. 3. Shows a representation of a Safety Clip holding a coach bolt in a correct position in a mounting rail slot;
Fig. 4 shows a detailed representation of a Safety Clip in a mounting rail slot deflected over a coach bolt head;
Fig. 5 shows examples of different Safety Clips;
Fig. 6 shows schematically that the Safety Clip inhibits ejection and misalignment of the bolt;
Fig. 7 shows a method of securing a bolt in a mounting rail with a Safety Clip; and
Figs 8A-8B shows graphical representations of securing a bolt in a mounting rail with a Safety Clip.

### DETAILED DESCRIPTION OF EMBODIMENTS

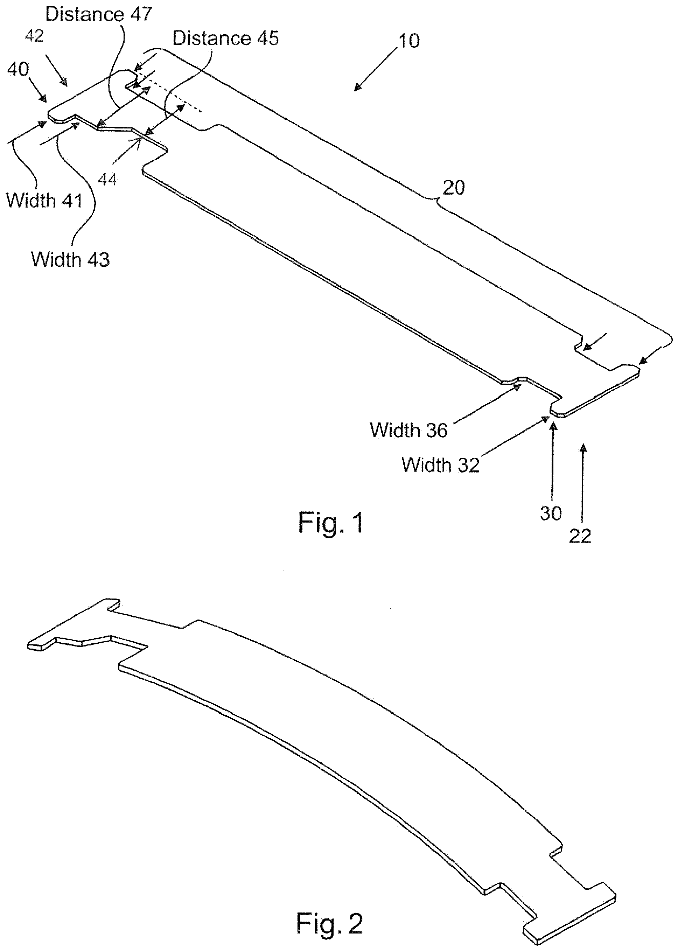

Fig. 1 shows a detailed example of a Safety Clip 10 for securing a bolt in a mounting rail, where not every feature is essential. The clip 10 comprises an elongated body 20, an anchor section 30, and a fixing section 40. The anchor section 30 and fixing section 40 can be part of the elongated body 20. The anchor section 30 is situated at or towards a first end 22 of the elongated body 20. The fixing section 40 is situated at or towards a second end 24 of the elongated body distal to the first end 22. The anchor section 30 is configured to be inserted into a first slot of a mounting rail. When the anchor section 30 has been inserted into a first slot of the mounting rail the elongated body 20 and fixing section 40 are configured to enable the fixing section 40 to be inserted into a second slot of the mounting rail. When the anchor section 30 has been inserted into the first slot and the fixing section 40 has been inserted into the second slot the elongated body 20 is configured to contact a bolt head of a bolt inserted into a third slot of the mounting rail. The third slot of the mounting rail is situated between the first slot and the second slot of the mounting rail.

In an example, the clip is made from spring steel. For example spring steel 1.4310 according to standard DIN-EN 10088-3, X10CrNi18-8. In an example, the clip is made from a flat spring steel stripe having a thickness of 0.3mm, which can provide for optimal deflection during the mounting process.

According to an example, the elongated body is configured to bend.

According to an example, the elongated body is configured to bend elastically from a first geometry to a second geometry and upon release return back to the first geometry.

According to an example before insertion of the anchor section into the first slot the elongated body is substantially straight.

According to an example, when the anchor section has been inserted into the first slot and the fixing section has been inserted into the second slot the elongated body is configured to push against the bolt head of the bolt inserted into the third slot of the mounting rail.

According to an example, a width 32 of the anchor section perpendicular to a long axis of the elongated body in an axis extending from a first point on a first side of the anchor section to a second point on a second side of the anchor section is greater than a width of the first slot. The width of the first slot is perpendicular to an axis of the mounting rail that extends from the first slot to the second slot.

According to an example, an anchor neck section 34 of the elongated body adjacent to the anchor section has a width 36 perpendicular to the long axis of the elongated body in an axis extending from a first point on a first side of the anchor neck section to a second point on a second side of the anchor neck section that is less than the width of the first slot. The axis extending from the first point on the first side of the anchor section to the second point on the second side of the anchor section is in a direction substantially parallel to a direction of the axis extending from the first point on the first side of the anchor neck section to the second point on the second side of the anchor neck section.

According to an example, a width 41 of the fixing section perpendicular to a long axis of the elongated body in an axis extending from a first point on a first side of the fixing section to a second point on a second side of the fixing section is greater than a width of the second slot. The width of the second slot is perpendicular to an axis of the mounting rail that extends from the first slot to the second slot.

According to an example, a fixing neck section 42of the elongated body adjacent to the fixing section has a width 43 perpendicular to the long axis of the elongated body in an axis extending from a first point on a first side of the fixing neck section to a second point on a second side of the fixing neck section that is less than the width of the second slot. The axis extending from the first point on the first side of the fixing section to the second point on the second side of the fixing section is in a direction substantially parallel to a direction of the axis extending from the first point on the first side of the fixing neck section to the second point on the second side of the fixing neck section.

According to an example, the first side of the fixing section is on an opposite side of the clip to the second side of the fixing neck section. A first axis parallel to the long axis of the elongated body goes through the first point on the first side of the fixing section and a second axis parallel to the long axis of the elongated body goes through a point on a first section 44 of the second side of the fixing neck section. A distance 45 perpendicular to the long axis extending from the first axis to the second axis is less than the width of the second slot.

According to an example, a second section 46 of the second side of the fixing neck section is situated between the first section of the second side of the fixing neck section and the second side of the fixing section. A third axis parallel to the long axis of the elongated body goes through a point on the second section of the second side of the fixing neck section. A distance 47 perpendicular to the long axis extending from the first axis to the third axis is greater than the width of the second slot.

Fig. 2 shows the Safety Clip as shown in Fig. 1, but now shown deflected such as when applied into the slots of a mounting rail to secure a bolt - the mounting rail and bolt are not shown to aid visualization.

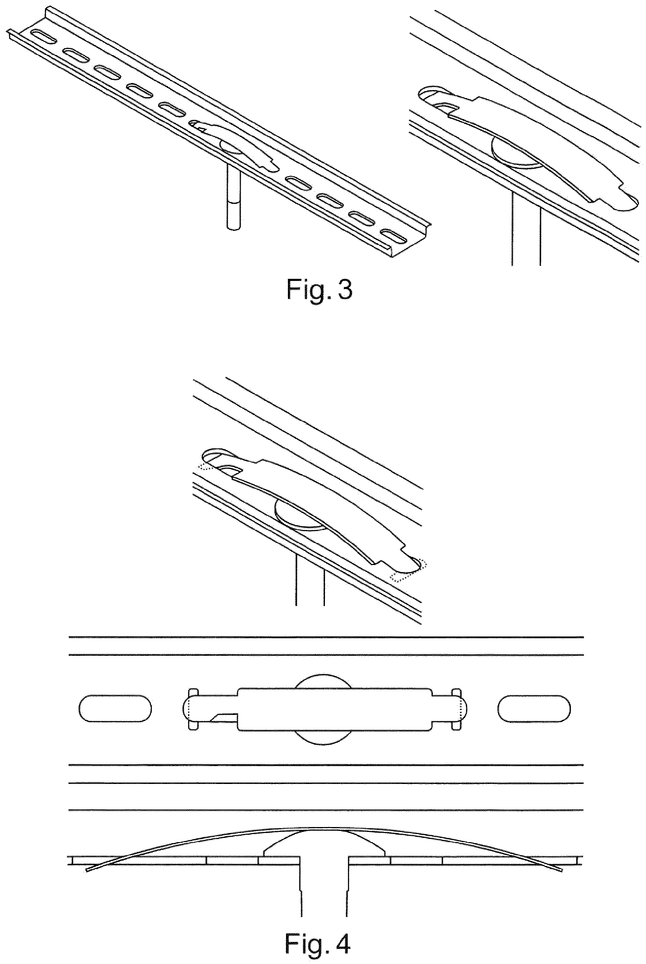

Fig. 3 shows the correct positioning of a Safety Clip to hold a bolt, such as a coach bolt, in a slot of a mounting rail.

Fig. 4 shows a detailed view of a Safety Clip holding a bolt in a mounting rail.

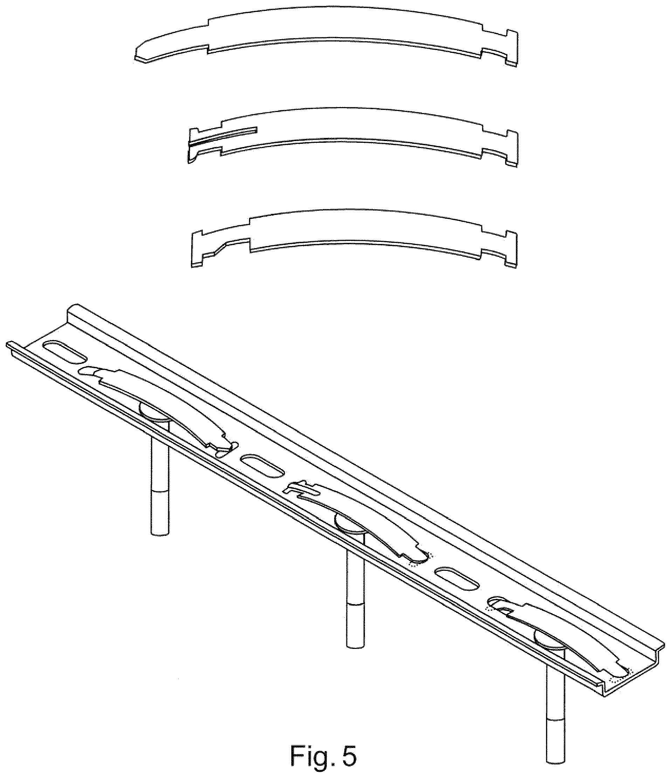

Fig. 5 shows different examples of Safety Clip, with only the bottom Safety Clip described in great detail.

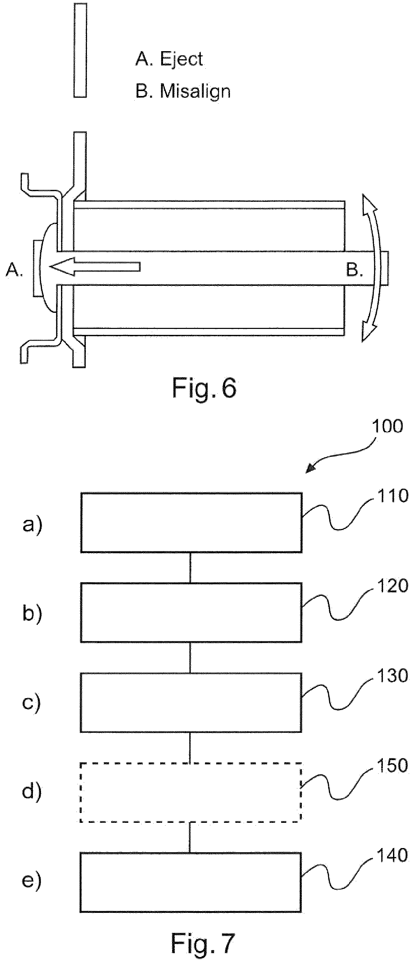

Fig. 6 shows schematically advantages provided by the Safety Clip. The Safety Clip pushes the bolt down into its slot, and stops it ejecting. Also, because the bolt is pushed down by the Safety Clip, the bottom of the head of the bolt is firmly seated against the top of the mounting rail and the main body of the bolt extending into the mounting rail is held firmly and does not move around. Thus, misalignment is also mitigated.

Fig. 7 shows a method 100 of securing a bolt in a mounting rail with a Safety Clip in its basic steps, where the dashed box represents an optional step. The method 100 comprises:
in an inserting step 110, also referred to as step a), inserting a body of a bolt through a first slot of a mounting rail from a set side of the mounting rail;
in an inserting step 120, also referred to as step b), inserting an anchor section situated at or towards a first end of an elongated body of a clip through a second slot of the mounting rail from the set side of the mounting rail, wherein the second slot is located adjacent to the first slot;
in an inserting step 130, also referred to as step c), inserting a fixing section situated at or towards a second end of the elongated body of the clip through a third slot of the mounting rail from the set side of the mounting rail; and
in a contacting step 140, also referred to as step e), contacting a head of the bolt with the elongated body of the clip.

According to an example, step c) comprises bending the elongated body of the clip.

According to an example, a width of the anchor section perpendicular to a long axis of the elongated body in an axis extending from a first point on a first side of the anchor section to a second point on a second side of the anchor section is greater than a width of the second slot. The width of the second slot is perpendicular to an axis of the mounting rail that extends from the second slot to the third slot. An anchor neck section of the elongated body adjacent to the anchor section has a width perpendicular to the long axis of the elongated body in an axis extending from a first point on a first side of the anchor neck section to a second point on a second side of the anchor neck section that is less than the width of the second slot. The axis extending from the first point on the first side of the anchor section to the second point on the second side of the anchor section is in a direction substantially parallel to a direction of the axis extending from the first point on the first side of the anchor neck section to the second point on the second side of the anchor neck section. Step b) can then comprise inserting the anchor section through the second slot with the axis extending from the first point on the first side of the anchor section to the second point on the second side of the anchor section being in a direction other than perpendicular to the axis of the mounting rail and then rotating the clip such that the axis extending from the first point on the first side of the anchor section to the second point on the second side of the anchor section is perpendicular to the axis of the mounting rail.

In other words, one end of the clip is inserted into a slot of a mounting rail with two tabs inserted into the rail slot parallel to a long side of the slot, and then the clip is rotated 90 degrees to fix the clip in the slot by the tabs that are wider that the width of the slot. According to an example, a width of the fixing section perpendicular to a long axis of the elongated body in an axis extending from a first point on a first side of the fixing section to a second point on a second side of the fixing section is greater than a width of the third slot. The width of the third slot is perpendicular to an axis of the mounting rail that extends from the first slot to the second slot. A fixing neck section of the elongated body adjacent to the fixing section has a width perpendicular to the long axis of the elongated body in an axis extending from a first point on a first side of the fixing neck section to a second point on a second side of the fixing neck section that is less than the width of the third slot. The axis extending from the first point on the first side of the fixing section to the second point on the second side of the fixing section is in a direction substantially parallel to a direction of the axis extending from the first point on the first side of the fixing neck section to the second point on the second side of the fixing neck section. The first side of the fixing section is on an opposite side of the clip to the second side of the fixing neck section. A first axis parallel to the long axis of the elongated body goes through the first point on the first side of the fixing section and a second axis parallel to the long axis of the elongated body goes through a point on a first section of the second side of the fixing neck section. A distance perpendicular to the long axis extending from the first axis to the second axis is less than the width of the second slot. Step c) comprises inserting the second side of the fixing section into the third slot followed by moving the clip sideways such that the first section of the second side of the fixing neck section is moved towards a facing side of the third slot followed by inserting the first side of the fixing section into the third slot.

In other words, a first part of the clip is inserted into a slot of a mounting rail, and the clip is bent over a bolt head in an adjacent slot and the free end of the clip is inserted into another slot on the other side of the bolt. This second end of the clip has an end width formed in effect from two tabs wider than the width of the slot, which means that once inserted it will not spring out and securely holds the bolt. However, a neck of the clip close to the wide end has a narrower section that enables one tab of the end to be inserted into the slot and pushing the clip such that the inserted tab is pushed further under the rail results in the opposing tab of the wide end clearing the rail and being positioned over the slot. Then this end can also be inserted into the slot by pushing it forwards. The clip can then be centred with both tabs under the rail wider than the slot, and the clip is secure.

According to an example, a second section of the second side of the fixing neck section is situated between the first section of the second side of the fixing neck section and the second side of the fixing section. A third axis parallel to the long axis of the elongated body goes through a point on the second section of the second side of the fixing neck section. A distance perpendicular to the long axis extending from the first axis to the third axis is greater than the width of the second slot. The method can then comprise step d), positioning 150 the clip such that the second side of the fixing neck section is adjacent a facing side of the third slot.

In this way, after insertion of the fixing section, when the wide end of the fixing end butts up against the bottom of the rail, for example due to a clip being flexible, a part of the clip is positioned at the slot position that is of a geometry such that sideways movement of the clip does not result in either end or tab of the fixing end coming within the slot. To release the clip the clip has to be pushed further into the slot so that a narrower section of a neck of the clip is at a position of the slot, and then sideways movement of the clip brings one tab of the fixing end within the slot and it can then be pulled forward out of the slot. The clip can then be moved sideways in the opposite direction to bring the other tab out of the slot to enable that end of the clip to be removed from its slot. Thus, without this pushing forward and sideways movement of the clip, the clip is securely held in the mounting rail and securely holds the bolt in position.

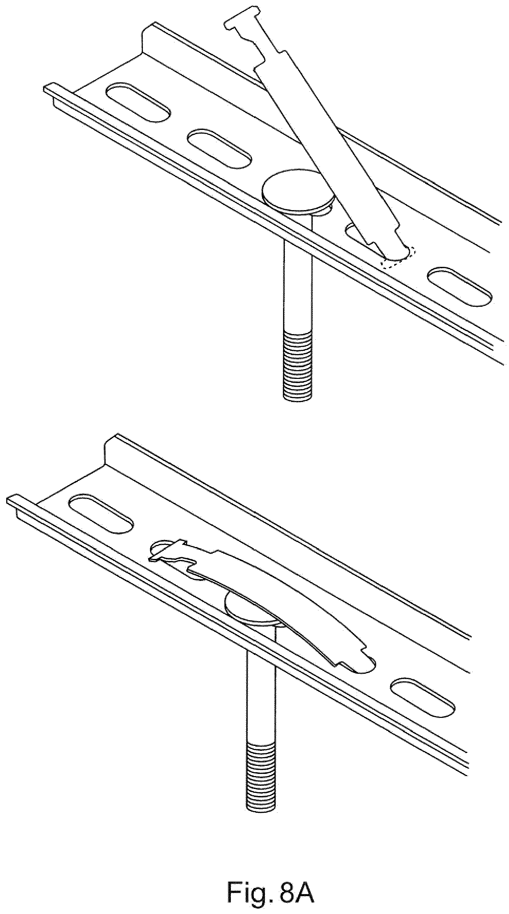

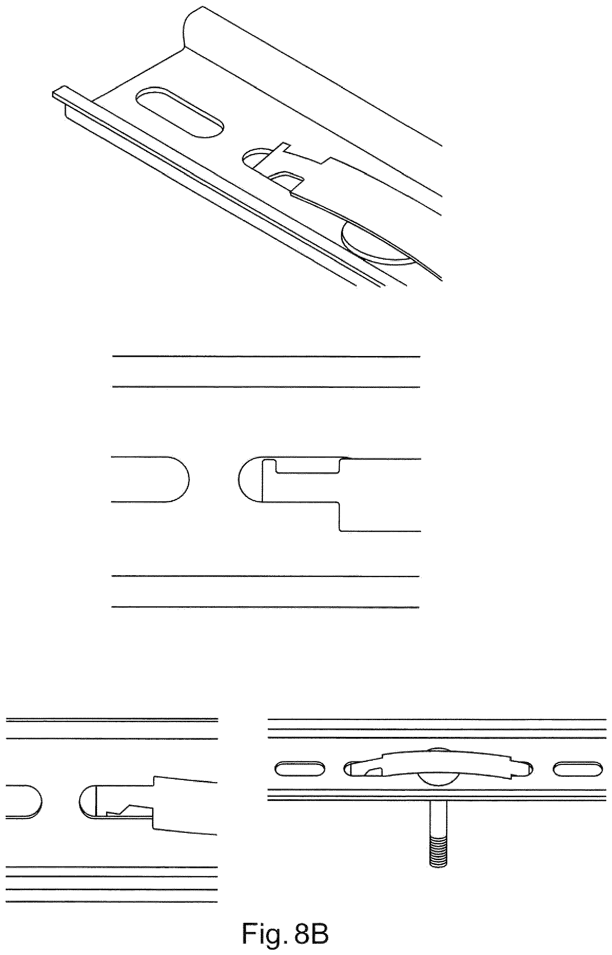

The above described method is shown diagrammatically in Figs 8A-(B, which show the Safety Clip being inserted in slots of a mounting rail to secure a bolt.

From the above detailed description of the Safety Clip, and how it is used to secure a bolt in a mounting rail the skilled person would be aware how to correctly determine the dimensions of the Safety Clip for mounting rails having different sized slots and a different spacing between slots.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A Safety Clip (10) for securing a bolt in a mounting rail, the clip comprising:
- an elongated body (20);
- an anchor section (30); and
- a fixing section (40);
wherein, the anchor section is situated at or towards a first end (22) of the elongated body;
wherein, the fixing section is situated at or towards a second end (24) of the elongated body distal to the first end;
wherein, the anchor section is configured to be inserted into a first slot of a mounting rail;
wherein, when the anchor section has been inserted into a first slot of the mounting rail the elongated body and fixing section are configured to enable the fixing section to be inserted into a second slot of the mounting rail; and
wherein, when the anchor section has been inserted into the first slot and the fixing section has been inserted into the second slot the elongated body is configured to contact a bolt head of a bolt inserted into a third slot of the mounting rail, wherein the third slot is situated between the first slot and the second slot.

2. Safety Clip according to claim 1, wherein the elongated body is configured to bend.

3. Safety Clip according to claim 2, wherein the elongated body is configured to bend elastically from a first geometry to a second geometry and upon release return back to the first geometry.

4. Safety Clip according to any of claims 1-3, wherein before insertion of the anchor section into the first slot the elongated body is substantially straight.

5. Safety Clip according to any of claims 1-4, wherein when the anchor section has been inserted into the first slot and the fixing section has been inserted into the second slot the elongated body is configured to push against the bolt head of the bolt inserted into the third slot of the mounting rail.

6. Safety Clip according to any of claims 1-5, wherein a width (32) of the anchor section perpendicular to a long axis of the elongated body in an axis extending from a first point on a first side of the anchor section to a second point on a second side of the anchor section is greater than a width of the first slot, wherein the width of the first slot is perpendicular to an axis of the mounting rail that extends from the first slot to the second slot.

7. Safety Clip according to claim 6, wherein an anchor neck section (34) of the elongated body adjacent to the anchor section has a width (36) perpendicular to the long axis of the elongated body in an axis extending from a first point on a first side of the anchor neck section to a second point on a second side of the anchor neck section that is less than the width of the first slot, wherein the axis extending from the first point on the first side of the anchor section to the second point on the second side of the anchor section is in a direction substantially parallel to a direction of the axis extending from the first point on the first side of the anchor neck section to the second point on the second side of the anchor neck section.

8. Safety Clip according to any of claims 1-6, wherein a width (41) of the fixing section perpendicular to a long axis of the elongated body in an axis extending from a first point on a first side of the fixing section to a second point on a second side of the fixing section is greater than a width of the second slot, wherein the width of the second slot is perpendicular to an axis of the mounting rail that extends from the first slot to the second slot.

9. Safety Clip according to claim 8, wherein a fixing neck section (42) of the elongated body adjacent to the fixing section has a width (43) perpendicular to the long axis of the elongated body in an axis extending from a first point on a first side of the fixing neck section to a second point on a second side of the fixing neck section that is less than the width of the second slot, wherein the axis extending from the first point on the first side of the fixing section to the second point on the second side of the fixing section is in a direction substantially parallel to a direction of the axis extending from the first point on the first side of the fixing neck section to the second point on the second side of the fixing neck section.

10. Safety Clip according to claim 9, wherein the first side of the fixing section is on an opposite side of the clip to the second side of the fixing neck section, wherein a first axis parallel to the long axis of the elongated body goes through the first point on the first side of the fixing section and a second axis parallel to the long axis of the elongated body goes through a point on a first section (44) of the second side of the fixing neck section, and wherein a distance (45) perpendicular to the long axis extending from the first axis to the second axis is less than the width of the second slot.

11. Safety Clip according to claim 10, wherein a second section (46) of the second side of the fixing neck section is situated between the first section of the second side of the fixing neck section and the second side of the fixing section, wherein a third axis parallel to the long axis of the elongated body goes through a point on the second section of the second side of the fixing neck section, and wherein a distance (47) perpendicular to the long axis extending from the first axis to the third axis is greater than the width of the second slot.

12. A method (100) of securing a bolt in a mounting rail with a Safety Clip, comprising:
a) inserting (110) a body of a bolt through a first slot of a mounting rail from a set side of the mounting rail;
b) inserting (120) an anchor section situated at or towards a first end of an elongated body of a clip through a second slot of the mounting rail from the set side of the mounting rail, wherein the second slot is located adjacent to the first slot;
c) inserting (130) a fixing section situated at or towards a second end of the elongated body of the clip through a third slot of the mounting rail from the set side of the mounting rail; and
e) contacting (140) a head of the bolt with the elongated body of the clip.

13. Method according to claim 12, wherein step c) comprises bending the elongated body of the clip.

14. Method according to any of claims 12-13, wherein a width of the anchor section perpendicular to a long axis of the elongated body in an axis extending from a first point on a first side of the anchor section to a second point on a second side of the anchor section is greater than a width of the second slot, wherein the width of the second slot is perpendicular to an axis of the mounting rail that extends from the second slot to the third slot, wherein an anchor neck section of the elongated body adjacent to the anchor section has a width perpendicular to the long axis of the elongated body in an axis extending from a first point on a first side of the anchor neck section to a second point on a second side of the anchor neck section that is less than the width of the second slot, wherein the axis extending from the first point on the first side of the anchor section to the second point on the second side of the anchor section is in a direction substantially parallel to a direction of the axis extending from the first point on the first side of the anchor neck section to the second point on the second side of the anchor neck section, and wherein step b) comprises inserting the anchor section through the second slot with the axis extending from the first point on the first side of the anchor section to the second point on the second side of the anchor section being in a direction other than perpendicular to the axis of the mounting rail and then rotating the clip such that the axis extending from the first point on the first side of the anchor section to the second point on the second side of the anchor section is perpendicular to the axis of the mounting rail.

15. Method according to any of claims 12-14, wherein a width of the fixing section perpendicular to a long axis of the elongated body in an axis extending from a first point on a first side of the fixing section to a second point on a second side of the fixing section is greater than a width of the third slot, wherein the width of the third slot is perpendicular to an axis of the mounting rail that extends from the first slot to the second slot, wherein a fixing neck section of the elongated body adjacent to the fixing section has a width perpendicular to the long axis of the elongated body in an axis extending from a first point on a first side of the fixing neck section to a second point on a second side of the fixing neck section that is less than the width of the third slot, wherein the axis extending from the first point on the first side of the fixing section to the second point on the second side of the fixing section is in a direction substantially parallel to a direction of the axis extending from the first point on the first side of the fixing neck section to the second point on the second side of the fixing neck section, wherein the first side of the fixing section is on an opposite side of the clip to the second side of the fixing neck section, wherein a first axis parallel to the long axis of the elongated body goes through the first point on the first side of the fixing section and a second axis parallel to the long axis of the elongated body goes through a point on a first section of the second side of the fixing neck section, and wherein a distance perpendicular to the long axis extending from the first axis to the second axis is less than the width of the second slot, and wherein step c) comprises inserting the second side of the fixing section into the third slot followed by moving the clip sideways such that the first section of the second side of the fixing neck section is moved towards a facing side of the third slot followed by inserting the first side of the fixing section into the third slot.

16. Method according to claim 15, wherein a second section of the second side of the fixing neck section is situated between the first section of the second side of the fixing neck section and the second side of the fixing section, wherein a third axis parallel to the long axis of the elongated body goes through a point on the second section of the second side of the fixing neck section, and wherein a distance perpendicular to the long axis extending from the first axis to the third axis is greater than the width of the second slot, and wherein the method comprises step d), positioning (150) the clip such that the second side of the fixing neck section is adjacent a facing side of the third slot.
